# EUROPÄISCHE PATENTANMELDUNG

(11) **EP 4 442 951 A1**
(43) Veröffentlichungstag der Anmeldung: **09.10.2024**
(21) Anmeldenummer: 24165264.3
(22) Anmeldetag: 21.03.2024
(51) Int. Cl.: E06B 3/263, E06B 3/96, E06B 3/98, E06B 3/12

(54) **FENSTER-, TÜR- UND/ODER FASSADENKONSTRUKTION UND VERFAHREN ZUR HERSTELLUNG EINER ECKVERBINDUNG EINER FENSTER-, TÜR- UND/ODER FASSADENKONSTRUKTION**

(30) Priorität: 05.04.2023 DE 102023108789
(71) Anmelder: SCHÜCO International KG, 33609 Bielefeld (DE)
(72) Erfinder: KÖNIG CASTRO, Marvin, 32584 Löhne (DE); WIERSPECKER, Dieter, 49324 Melle (DE); LALK, Marvin, 32760 Detmold (DE); BINNINGER, Steffen, 21641 Apensen (DE); ABE, André, 33649 Bielefeld (DE); GÖDECKER, Christian, 59558 Lippstadt (DE); HODAPP, Stefan, 33758 Schloß Holte-Stukenbrock (DE)
(74) Vertreter: Kleine, Hubertus

(57) **Zusammenfassung**

Eine Fenster-, Tür- und/oder Fassadenkonstruktion umfassend eine Eckverbindung (50, 60, 70) mit zwei miteinander durch eine oder mehrere Schweißverbindungen (6, 7, 6' ,7', 10, 10', 11, 11', 33) verbundene Metallprofile (1, 2), wobei die Schweißverbindung oder Schweißverbindungen (6, 7, 6' ,7', 10, 10', 11, 11', 31, 33) als eine laserverschweißte Verbindung ausgebildet ist, wobei die Schweißverbindung und/oder Schweißverbindungen (6, 7, 6' ,7', 10, 10', 11, 11', 33) die Profile (1, 2) mittelbar mittels eines Eckverbinderwinkels (12, 16, 32), miteinander verbindet, wobei besonders bevorzugt die Profile (1, 2) jeweils Profilkammern (8, 9) aufweist, wobei der Eckverbinderwinkel (12, 16, 32) zumindest zwei Schenkel aufweist, welche in den Profilkammern (8, 9) eingesteckt sind.
sowie ein Verfahren zur Herstellung einer Eckverbindung (50, 60, 70) einer Fenster-, Tür- und/oder Fassadenkonstruktion, vorzugsweise gemäß einem der vorhergehenden Ansprüche, mit den folgenden Schritten:
a) Bereitstellen zweier Metallprofile (1, 2), vorzugsweise beschichteter Metallprofile, und winkliges Aneinander-Positionieren beider Metallprofile (1, 2);
das Bereitstellen durch ein Einführen jeweils eines Schenkels des Eckverbinderwinkels (12, 16, 32) in eine Profilkammer (8, 9) des jeweiligen Metallprofils (1, 2) erfolgt, so dass in jedem der beiden Metallprofile (1, 2) jeweils ein Schenkel des Eckverbinderwinkels (12, 16, 32) angeordnet ist;
und
b) Verschweißen beider Metallprofile (1, 2) unter Verwendung eines Laser-Schweißgerätes, insbesondere eines Faserlaser-Schweißgerätes, wobei die Leistung des Laser-Schweißgerätes derart eingestellt ist, dass eine durch eine Profilwandung durchgeschweißte Schweißverbindung (6, 7, 6' ,7', 10, 10', 11, 11', 31, 33) bereitgestellt wird,
derart, dass zwischen jedem Metallprofil (1, 2) und dem Eckverbinderwinkel (12, 16, 32) zumindest eine, vorzugsweise durchgeschweißte, Schweißverbindung (6, 7, 6' ,7', 10, 10', 11, 11', 33) angeordnet ist.

## Beschreibung

Die Erfindung betrifft eine Fenster-, Tür- und/oder Fassadenkonstruktion mit einer Eckverbindung und ein Verfahren zur Herstellung einer Eckverbindung.

Konstruktionen der vorgenannten Art mit verschweißten Eckverbindung sind an sich bekannt. Dabei wurden zumeist unbeschichtete Metallprofile miteinander über brennstoffbasierten Schweißverfahren unter Verwendung von Schweißzusätzen miteinander verbunden. Die Metallprofile weisen zumeist aufgrund des breitflächigen Wärmeeintrags Anlauffarben auf, welche durch nachträgliche Beschichtung kaschiert werden. Ein Beschichten eines voluminösen Rahmens oder einer Tür ist dabei deutlich aufwendiger als das Beschichten von Einzelprofilen.

Darüber hinaus sorgen die vorgenannten Schweißverfahren für die Ausbildung breiter unansehnlicher Schweißnähte mit großem Überstand gegenüber den benachbarten Bereichen.

Der Überstand kann durch Abschleifen abgetragen werden, wodurch allerdings etwaige Beschichtungen, sofern vorhanden, zur Gänze ebenfalls abgetragen werden. Eine Nachbeschichtung ist in diesem Fall zwingend erforderlich.

Ohne Abschleifen erhält mal somit eine optisch und haptisch wenig ansprechende Eckverbindungen. Mit Abschleifen erhöht sich der Arbeitsaufwand durch eine Nachbeschichtung erheblich, da ein entsprechendes Beschichtungsmaterial großflächig im Bereich der Eckverbindung aufgetragen werden muss.

Aufgabe der Erfindung ist es daher eine ansehnliche verschweißte Eckverbindung mit geringem Arbeitsaufwand bereitzustellen.

Die erfindungsgemäße Aufgabe wird gelöst durch eine Fenster-, Tür- und/oder Fassadenkonstruktion mit den Merkmalen des Anspruchs 1. Und durch ein Verfahren zur Herstellung einer Eckverbindung mit den Merkmalen des Anspruchs 16.

Die erfindungsgemäße Fenster-, Tür- und/oder Fassadenkonstruktion umfasst eine Eckverbindung mit zumindest zwei miteinander durch eine oder mehrere Schweißverbindungen verbundene Metallprofile, vorzugsweise beschichtete Metallprofile, die Schweißverbindung oder Schweißverbindungen als eine laserverschweißte Verbindung ausgebildet ist oder bei mehreren Schweißverbindungen als mehrere laserverschweißte Verbindungen ausgebildet sind.

Das Laserschweißen ermöglicht hierbei einen maßhaltigen und zielgenauen Wärmeeintrag, so dass beschichtete Metallprofile verschweißbar sind, bei geringen sichtbaren Schäden am Profil, insbesondere an der Beschichtung des Profils.

Als Metallprofile können somit sowohl unbeschichtete Metallprofile, wie z.B. aus Stahl, Buntmetalle, Aluminium, Edelstahl, genutzt werden. Insbesondere und besonders vorteilhaft können allerdings auch bereits beschichtete Metallprofile genutzt werden. Als Beschichtungssysteme können alle beliebigen Systeme, wie z.B. Pulver-, Eloxaloberflächen- und/oder Nasslackbeschichtungen, und/oder galvanische Überzüge und/oder Folierungen genutzt werden.

Das Laserschweißen kann vorteilhaft ohne Schweißzusätze realisiert werden. Ohne Schweißzusätze erfolgt kein zusätzlicher Materialauftrag auf das Material der Metallprofile. Ein Abbrennen von Beschichtungsmaterial durch Kontakt mit dem Schweißzusatz wird hierbei vorteilhaft vermieden.

In vielen Situationen kann es notwendig sein, dass das Fenster, die Tür oder die Fassade eine besonders gute Maßhaltigkeit gegenüber einem Rahmen, z.B. einem Tür- oder Fensterrahmen, einhalten. Bei stark überstehenden Schweißverbindungen kann das Schließen des Fensters oder der Tür behindert werden. Überdies können Dichtungen beim Schließen lokal besonders stark komprimiert werden, so dass es an dieser Stelle der Dichtungen zu einer unerwünschten höheren mechanischen Belastung kommt. Auch dies wird durch die Verwendung von Laserschweiß-Verbindungen vermieden, welche als keine oder nur geringe Vorsprünge gegenüber den benachbarten Bereichen ausgebildet sind.

Die Schweißverbindung und/oder Schweißverbindungen verbinden die Profile mittelbar mittels eines Eckverbinderwinkels miteinander, wobei die Profile jeweils Profilkammern aufweisen, wobei der Eckverbinderwinkel zumindest zwei Schenkel aufweisen, welche in den Profilkammern eingesteckt sind.

Vorteilhafte Ausgestaltungen der Erfindung sind Gegenstand der Unteransprüche.

Die Schweißverbindung kann als Schweißnaht oder Flächenschweißgeometrie mit einem Überstand gegenüber den benachbarten Bereichen von weniger als 1 mm, vorzugsweise weniger als 0,5 mm, ausgebildet sein. Die Eckverbindung ist dadurch haptisch ansprechend und weist aufgrund der guten Maßhaltigkeit kaum Behinderungen gegenüber einem Rahmen oder einer Maueröffnung auf.

Besonders bevorzugt kann die Schweißverbindung annähernd eben zu den benachbarten Bereichen, also mit einem Überstand von weniger als 0,1 mm, ausgebildet sein.

Die Schweißverbindung kann als geschlossene Schweißnaht oder als Abfolge von Schweißpunkten oder als Flächenschweißgeometrie ausgebildet sein. Bevorzugt beträgt der mittlere Schweißdurchmesser der Punktverschweißung und/oder die Schweißnahtdurchmesser senkrecht zu seiner Längserstreckung zumindest 2mm.

Die Schweißnaht oder die lineare Abfolge aus Punktverschweißungen kann weist eine maximale Erstreckung von mehr als 15 mm, vorzugsweise mehr als 20mm auf.

Alternativ kann die Schweißverbindung durch lokale Änderung des Metallgefüges sogar gegenüber den benachbarten Bereichen als geringe Vertiefung ausgebildet sein. Dies hat den besonderen Vorteil, dass eine nachträgliche Beschichtung im Schweißbereich zu einer Einebnung gegenüber den benachbarten Bereichen führen kann, so dass eine insgesamt ebene Fläche ohne optische oder haptische Wahrnehmung des Schweißbereichs ausgebildet werden kann.

Benachbart zur laserverschweißten Verbindung kann ein lackierter Bereich als Abbrandbereich ausgebildet sein, welcher Produkte der thermischen Zersetzung des Lackes des lackierten Bereichs aufweist. Jenseits dieses Abbrandbereichs kann ebenfalls eine Lackierung der Metallprofile vorgesehen sein, allerdings, ohne dass thermische Zersetzungsprodukte quantitativ in der Lackzusammensetzung oder in der Schweißbadzusammensetzung der lasergeschweißten Verbindung enthalten sind.

Der besagte Abbrandbereich erstreckt sich dabei vorteilhaft in einer Breite von weniger als 2 mm, vorzugsweise weniger als 1 mm, von der lasergeschweißten Verbindung weg. Ein solch geringer Abbrandbereich ist wünschenswert und ist durch das Laserschweißen erreichbar, insbesondere bei Anwendung eines Faserlaser-Schweißgerätes.

Zusätzlich zu der mittelbaren Schweißverbindung weist die Eckverbindung eine weitere zweite Schweißverbindung auf, welche die Metallprofile der Eckverbindung unmittelbar miteinander verbindet.

Eine unmittelbare Verbindung ist eine Schweißverbindung, welche einen Schweißbereich an jedem der beiden Profile aufweist.

Die zweite Schweißverbindung kann vorteilhaft für eine besonders stabile Verbindung zumindest bereichsweise entlang einer Gehrung entlang einer Sichtseite der Eckverbindung angeordnet sein. Die Sichtseite weist eine besondere breite Kontaktfläche beider Metallprofile auf, so dass hier eine sehr umfassendere Verbindung über die gesamte Breite der Sichtseite erfolgen kann. Besonders bevorzugt ist die Schweißverbindung umlaufend, also um den gesamten außenseitigen Verbindungsbereich der beiden Profile, entlang der Gehrung der Eckverbindung angeordnet.

Die besagte weitere zweite Schweißverbindung kann vorteilhaft zumindest entlang einer Außenseite senkrecht zur Sichtseite der Eckverbindung angeordnet sein. Diese Schweißverbindung ist nach der Montage quasi unsichtbar und damit für den Endnutzer besonders ansprechend.

Die Schweißverbindung verbindet die Profile mittelbar mittels eines Eckverbinderwinkels miteinander. Dabei kann die Verbindung insbesondere entlang der vorgenannten Außenseite senkrecht zur Sichtseite angeordnet sein. Durch die mittelbare Verbindung durch den Eckverbinderwinkel kann eine noch breitflächigere und damit stabilere Verbindung der beiden Profile erfolgen.

Die Schweißverbindung kann vorteilhaft als Schweißnaht einen Längsverlauf aufweist, welche parallel zur Längsachse A des jeweiligen Metallprofils verläuft. Analog kann auch eine Flächenschweißgeometrie eine Haupterstreckungsrichtung parallel zur Längsachse des jeweiligen Metallprofils aufweisen. Hier ist von einer besonders breiten Auflagefläche einer Profilwandung mit einem Schenkel des Eckverbinderwinkels auszugehen.

Der Eckverbinderwinkel kann konstruktiv derart ausgebildet sein, dass es zum Aufbau einer Vorspannung zwischen zwei aneinander anliegenden Kontaktflächen im Kontaktbereich der Metallprofile im montierten Zustand der Eckverbindung kommt. Dadurch werden die Profile zusätzlich gegeneinander gepresst, so dass ein Eindringen von Schmutz und Flüssigkeit, z.B. Regenwasser, im Bereich der Eckverbindung zusätzlich verhindert wird.

Die Längsachsen der Schenkel des Eckverbinderwinkels können einen ersten Winkel definieren, wobei eine aus beiden Schenkeln gebildete Winkelinnenfläche im Kontaktbereich beider Schenkel eine Ausnehmung aufweist.

Alternativ oder zusätzlich kann die Winkelinnenfläche einen zweiten Winkel definieren, welcher kleiner ist als der erste Winkel. Analog zur Ausnehmung wird durch die vorbeschriebene Ausgestaltung der Winkelinnenfläche durch Anziehen des Materials beim Erkalten der Schweißverbindung eine Vorspannung aufgebaut. Beispielsweise kann der Eckverbinder bei dieser Variante besonders bevorzugt als Vollmaterial-Eckverbinderwinkel ausgebildet sein.

Alternativ oder zusätzlich können zwei Schenkel des Eckverbinderwinkels als Federschenkel zum Abstützen gegen eine Profilwandung ausgebildet sind. Dieses Abstützen ermöglicht ein breitflächiges Verschmelzen beim Durchschwei-ßen, z.B. unter Aufleiten des Laserstrahls auf die Profilswand von der entgegengesetzten Seite zu der Seite, an welcher sich der Federschenkel abstützt. Insbesondere kann der Federschenkel über zwei Anlagewandungen ausgebildet sein, zwischen denen ein Federsteg ausgebildet ist. Erfolgt ein Druck auf die Anlagewandungen unter Verringerung des Abstandes der Anlagewandungen, so erfährt der Federsteg eine Biegeverformung unter Ausbildung einer Rückstellkraft.

Die Schweißverbindung kann vorteilhaft innerhalb einer Nut des Profils, vorzugsweise entlang eines Nutbodens, besonders bevorzugt entlang einer Kedernut, angeordnet sein. Durch die Schweißverbindung kann es zu einer geringen Aufrauhung der Oberfläche kommen. Dies bildet einen natürlichen Stop bei der Montage bzw. beim Einfädeln einer Kederfahne eines Dichtungskeders. Oftmals ist es bei langen Profilen für den Monteur schwierig das Ende der Nut zu finden. Meist wird der Keder dann an beiden Enden des Profils auf die Länge des Profils zugeschnitten. Wenn das Profil einen natürlichen Stop vorgibt, weiß der Monteur, dass er nicht mehr Kederdichtung in die Nut einfädeln muss. Die Schweißverbindung ermöglicht hier einen zusätzlichen Montagevorteil.

Die Schweißverbindung kann als eine durchgeschweißte Schweißverbindung ausgebildet sein, derart, dass zumindest eine Profilwandung über die Gesamtstärke der Profilwand ein erstarrtes Schmelzbad bildet. Sofern ein Eckverbinderwinkel eingesetzt wird, so bildet auch ein Teilbereich des Eckverbinderwinkels einen Teil des Schmelzbades. Insofern kann sowohl bei der unmittelbaren als auch bei der mittelbaren Verbindung der Metallprofile mittels Eckverbinderwinkel durch Laserverschweißung eine durchgeschweißte Schweißnaht mit einem entsprechenden erstarrten Schmelzbad über die gesamte Dicke der Profilwandung vorliegen.

Ebenfalls erfindungsgemäß ist ein Verfahren zur Herstellung einer Eckverbindung einer Fenster-, Tür- und/oder Fassadenkonstruktion. Dabei kann es sich vorteilhaft um die vorbeschriebene erfindungsgemäße Fenster-, Tür- und/oder Fassadenkonstruktion handeln.

In einem ersten Schritt erfolgt ein Bereitstellen zweier Metallprofile, vorzugsweise beschichteter Metallprofile. Ein besonders vorteilhafter Aspekt der Verwendung des Laserschweißens ist, dass aufgrund der sehr begrenzten Erwärmung es zu keiner Schädigung oder nur zu einer geringen lokalen und damit leicht zu reparierenden Schädigung der Beschichtung. Dabei kann das bereits vorhandene Laserschweißgerät auch gleich zur Nachbearbeitung der Beschichtung im Schweißbereich genutzt werden. Der Laser kann z.B. Beschichtungspartikel schmelzen, so dass sich diese im flüssigen Zustand im Schweißbereich verteilen können.

Das Bereitstellen umfasst ein Einführen jeweils eines Schenkels des Eckverbinderwinkels in eine Profilkammer des jeweiligen Metallprofils, so dass in jedem der beiden Metallprofile jeweils ein Schenkel des Eckverbinderwinkels angeordnet ist.

Die Partikel können aus der bestehenden Beschichtung stammen oder aber aus einer nachträglich auf die Schweißverbindung aufgetragenes Beschichtungsmaterial. Dies kann z.B. durch lokales Sputtern erfolgen.

Ein winkliges Aneinander-Positionieren beider Metallprofile kann z.B. das Aneinanderlegen zweier Kontaktflächen der beiden Metallprofile umfassen. Dabei wird an dieser Stelle ein Kontaktbereich gebildet.

In einem weiteren Schritt folgt auf das Aneinanderlegen ein Verschweißen beider Metallprofile unter Verwendung eines Laser-Schweißgerätes, insbesondere eines Faserlaser-Schweißgerätes. Das Verschweißen kann unmittelbar im Kontaktbereich der beiden Metallprofile erfolgen oder außerhalb des Kontaktbereichs insbesondere unter Verwendung eines Eckverbinderwinkels als Hilfsmittel.

Zur Schaffung einer mechanisch-stabilen Verbindung ist die Leistung des Laser-Schweißgerätes derart eingestellt, so dass eine durch eine Profilwandung und/oder entlang einer im Kontaktbereich zweier Profilwandungen durchgeschweißte Schweißverbindung bereitgestellt wird.

Die Schweißverbindung und/oder Schweißverbindungen wird derart angebracht, dass die Profile mittelbar mittels des Eckverbinderwinkels miteinander verbunden sind.

Vorteilhafte Ausgestaltungen des Verfahrens sind Gegenstand der Unteransprüche.

Das Verschweißen kann insbesondere nach der nachfolgenden vorteilhaften Variante erfolgen.

Dabei erfolgt das Bereitstellen durch ein Einführen jeweils eines Schenkels des Eckverbinderwinkels in eine Profilkammer des jeweiligen Metallprofils, so dass in jedem der beiden Metallprofile jeweils ein Schenkel des Eckverbinderwinkels angeordnet ist. Dabei erfolgt das Anliegen des Eckverbinderwinkels möglichst breitflächig an der inneren Seite der Profilwandung der Profilkammer, so dass sich beim Erwärmen der Profilkammer eine Übertragung des Wärmeflusses auf den Eckverbinderwinkel ergibt. Dadurch ergibt sich eine besonders breitflächige und vollständige Verschmelzung beider Bauteile im Rahmen der Verschweißung.

Zwischen jedem Metallprofil und dem Eckverbinderwinkel wird eine durchgeschweißten Schweißverbindungen, vorzugsweise unter Ausbildung einer Vorspannung, gebildet. Eine Vorspannung kann unter Ausnutzung der Längenausdehnung beim Erwärmen und der Materialverkürzung beim Erkalten des geschmolzenen Materials erfolgen. Das Erzeugen der Vorspannung kann durch konstruktiv durch das Design des Eckverbinderwinkels zusätzlich unterstützt werden. Die Vorspannung kann besonders optimal bei zwei aus Gehrung geschnittenen Metallprofilen ausgebildet werden.

Besonders bevorzugt erfolgen die Schweißverbindungen außerhalb des Kontaktbereichs und sie sind besonders bevorzugt außerhalb der Sichtseite der beiden Metallprofile angeordnet.

Es ist allerdings auch möglich, eine Schweißverbindung nach der ersten Variante des Verschweißens auszubilden, mit einer Schweißverbindung im Kontaktbereich und zusätzlich Schweißverbindungen über einen Eckverbinderwinkel nach der zweiten Variante herzustellen.

Das Verfahren nach beiden vorgenannten Varianten kann überdies ein Nacharbeiten umfassen, welches eine weitere Laserbearbeitung zur Ausbildung einer Beschichtung, insbesondere durch Schmelzen von Beschichtungskomponenten und/oder durch strahlenaktivierte Vernetzung des Beschichtungsmaterials und/oder durch Verdunstung von Beschichtungsbestandteilen umfasst.

Das Nachbearbeiten kann überdies den Auftrag von zusätzlichem Beschichtungsmaterial im Bereich der Schweißverbindungen umfassen. Der Auftrag kann auf verschiedene Weise, z.B. als lösungsmittelhaltige Beschichtungszusammensetzung, als lösungsmittelfreie Polymerbeschichtung und/oder als partikuläre Beschichtungszusammensetzung erfolgen.

Es kann allerdings auch ein Verschmelzen von bereits bestehendem Beschichtungsmaterial aus benachbarten Bereichen der Schweißverbindung unter Ausbildung einer geschlossenen Beschichtungsfläche erfolgen.

Weiterhin kann eine vorteilhafte Vorfixierung der Metallprofile mit dem jeweiligen Eckprofil erfolgen.

Die Vorfixierung kann durch Bohrung in den Eckverbinderwinkel und die Metallprofile erfolgen oder alternativ kann die Vorfixierung durch bereichsweise Verformung und/oder Einstanzung eines oder insbesondere beider Metallprofile erfolgen.

Zur Vorfixierung kann ein mechanisches Fixierungsmittel, z.B. eine Stange und/oder ein Stift und/oder eine Schraube genutzt werden, welches z.B. in die Bohrung eingeführt wird.

Die Vorfixierung wird während des Verschweißens gemäß Schritt b) aufrecht erhalten.

Es ist auch möglich, In die Metallprofile Öffnungen einzufügen, um einen Laserstrahl durch äußere Profilkammern hindurch zu einer tieferliegenden Profilwand zu leiten, an welcher die Verschweißung erfolgt. Die Öffnungen können zur besseren Ausrichtung des Laserstrahls auch als Langlöcher ausgebildet sein. Weiterhin optional können die Löcher nach dem Verschweißen in einer Nachbearbeitung verschlossen, beispielsweise verschweißt, werden.

Die Erfindung wird anhand der nachfolgenden Figuren anhand eines Ausführungsbeispiels näher erläutert. Die einzelnen Details des Ausführungsbeispiels sind in keinster Weise als beschränkend für den Gegenstand der vorliegenden Erfindung anzusehen. Vielmehr ergeben sich aus dem Ausführungsbeispiel für den Fachmann zahlreiche weitere Abwandlungsvarianten, die ebenfalls Teil der vorliegenden Erfindung sind. Es zeigt:
- Fig. 1: erste Perspektivansicht einer Eckverbindung zweier Profile einer Fenster-, Tür- oder Fassadenkonstruktion;
- Fig. 2: zweite Perspektivansicht einer Eckverbindung zweier Profile einer Fenster-, Tür- oder Fassadenkonstruktion;
- Fig. 3: Seitenansicht auf einen ersten Eckverbinder;
- Fig. 4: Seitenansicht auf einen zweiten Eckverbinder;
- Fig. 5a-5f: schematische Darstellungen mehrerer Schweißkonturen zur Herstellung der Eckverbinder;
- Fig. 6: schematische Schnittansicht auf ein Profil mit eingesetztem Eckverbinder zu Beginn einer Verschweißung;
- Fig. 7: schematische Schnittansicht auf ein Profil mit eingesetztem Eckverbinder am Ende einer Verschweißung;
- Fig. 8: Schnittansicht durch die Wandungen zweier zu verbindender Profile;
- Fig. 9: Schnittansicht der Fig. 8 nach einer Fügestellenformung;
- Fig. 10: Schnittansicht der Fig. 8 und 9 nach der Verschweißung; und
- Fig. 11a-11h: Perspektiv- und Schnittdarstellungen zu insgesamt vier Varianten der Vorfixierung der Profile vor dem Verschweißen und
- Fig. 12a-d: vier Varianten eines Schweißmusters.

Die vorliegende Erfindung betrifft ein Verfahren zur Herstellung einer Eckverbindung zweier Metallprofile einer Fenster-, Tür- oder Fassadenkonstruktion.

Das Verfahren erfolgt im Rahmen eines Durchschweißens einer Profilwandung oder einer Verbindungsstelle zweier Profilwandungen. Das Verschweißen erfolgt mittels eines Laserschweißverfahrens. Laserschweißen ist an sich bekannt und wird beispielsweise in der EP 0 238 171 A1 beschrieben.

Das Laserschweißen kann im Unterschied zu anderen Schweißtechniken insbesondere ohne Schweißzusätze erfolgen, welche für eine unerwünschte Materialverstärkung der Schweißnaht sorgen.

Ausgangsmaterial zur Herstellung der Eckverbindung sind Metallprofile. Dabei kann es sich beispielsweise um Edelstahlprofile oder Aluminiumprofile handeln.

Die Metallprofile sind besonders bevorzugt zumindest außenseitig beschichtet. Im Bereich der Kontaktflächen können die Metallprofile allerdings in an sich bekannter Weise bevorzugt unbeschichtet ausgebildet.

Das Laserschweißen kann nach zwei Varianten erfolgen, welche nachfolgend beschrieben werden.

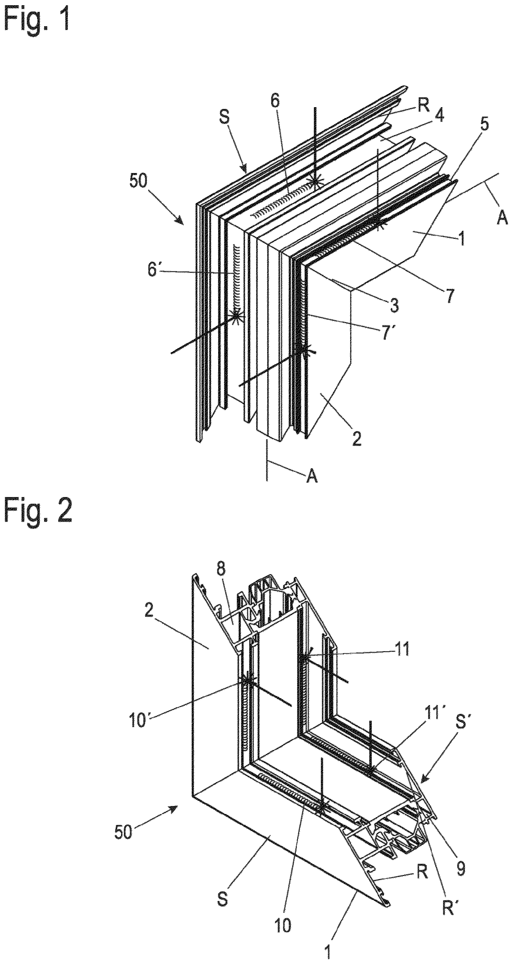

Die erste Variante erfolgt durch eine mittelbare Verschweißung der Profile 1 und 2 unter Verwendung eines Eckverbinderwinkels 12, 16 oder 32 beschrieben. Diese Variante ist insbesondere in den Fig. 1-7 erläutert.

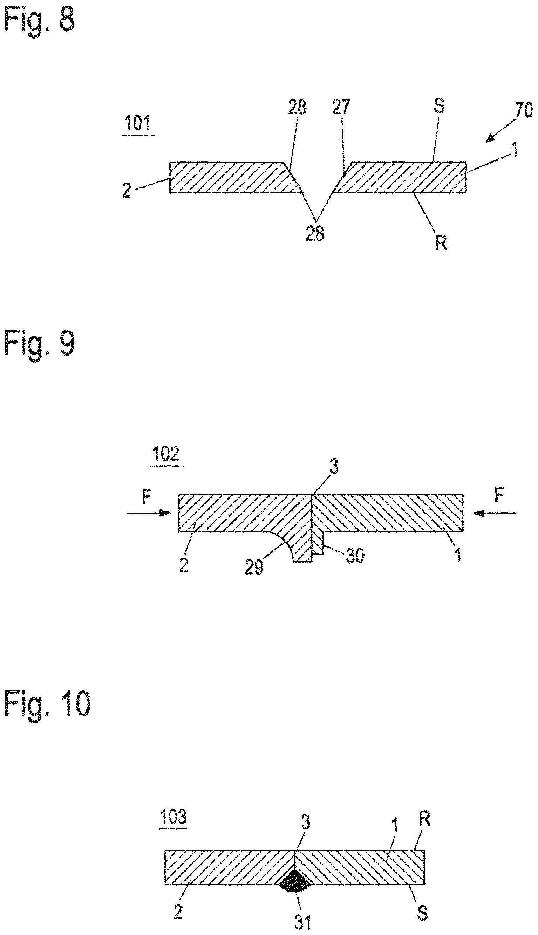

Die zweite Variante erfolgt durch eine unmittelbare Verschweißung der Profile 1 und 2 durch stoffschlüssige Verbindung der Kontaktflächen beider Profile 1 und 2 erreicht. Dies wird insbesondere anhand der Fig. 8-10 erläutert

Fig. 1 zeigt eine Eckverbindung 50 aus einem ersten Profil 1 und einem zweiten Profil 2. Die Profile 1 und 2 können ein Profil einer Tür-, einer Fenster- oder einer Fassadenkonstruktion sein. Dies betrifft somit u.a. sowohl eine Eckverbindung eines jeweiligen Türflügels oder Fensterflügels aber auch eine Eckverbindung eines jeweiligen Türrahmens oder Fensterrahmens. Sie weisen in an sich üblicher Bauweise eine Mehrzahl an Profilkammern, wie z.B. die Profilkammern 8 und 9 auf.

Die Kontaktflächen bilden einen Kontaktbereich 3. Die Kontaktflächen müssen allerdings nicht zwingend berühren, geringe Abstände, insbesondere unter 1 mm, zwischen den Profilen sind bei Produktionsungenauigkeiten unerwünscht allerdings möglich. Profile sind in Fig. 1 und 2 auf Gehrung gesägt, so dass die Kontaktflächen im Winkel von 45° zu der Längsachse A eines jeweiligen Profils 1 und 2 steht. Allerdings sind auch andere Formen von Kontaktbereichen möglich, z.B. mit Kontaktflächen senkrecht zur Längsachse A eines jeweiligen Profils, möglich.

Die Profile 1 und 2 weisen Nuten 4, 5, insbesondere Kedernuten auf, zur Aufnahme einer Kederfahne eines Dichtungskeders. Bei der Montage bzw. Einfädeln eines Dichtungskeders ist zumeist kein Endanschlag des Dichtungskeders vorgesehen. Das bedeutet zusätzlichen Montageaufwand beim Positionieren und Abgängen des Dichtungskeders während der Montage. Darüber hinaus ist der Dichtungskeder linear beweglich innerhalb der Nut.

Bei der Eckverbindung 50 der Fig. 1 weisen die Profile 1 und 2 jeweils eine Profilwandung mit einer Sichtseite S und einer Rückseite R auf. Dabei kann jedes der Profile, wie in Fig. 1 und 2 gezeigt, auch zwei Sichtseiten S und S' und entsprechend zwei Rückseiten R und R' aufweisen.

Innerhalb der Nuten 4 und 5 eines jeden Profils 1 und 2 sind Schweißverbindungen 6, 7, 6', 7' in Form von Schweißlinien oder Flächenschweißgeometrien aus einer Mehrzahl von Schweißlinien vorgesehen. Der Fachmann unterscheidet zwischen solchen Punktverschweißungen und Schweißlinien. Die Schweißlinien werden typischerweise als Schweißraupen bezeichnet, was zumeist einer ausgeprägten Materialwulst, welche durch Schmelzverformung und insbesondere durch Schweißzusätze ausgebildet wird.

Diese Materialwulst ist aus mehreren Gründen nachteilig. Im Sichtbereich verringert sie die optische Ansicht der Eckverbindung. Überdies ist sie anfällig gegen Rost und andere Umwelteinflüsse und muss, zumeist durch materialabhebende Prozesse wie Schleifen oder Fräsen, nachbearbeitet werden. Im überwiegenden Teil der Anwendungsfälle sind die in der Eckverbindung verarbeiteten Profile beschichtet. Die Beschichtung löst sich bei ausgeprägten Schweißraupen aufgrund von Oberflächenspannungen oder wird während der Nachbearbeitung abgetragen.

An den rahmenzugewandten Flächen oder den flügelzugewandten Flächen oder den Montageflächen zur Montage in einer Aussparung in einer Mauer behindern die Schweißraupen die exakte Einbaulage und können für eine Behinderung des Verschließens oder der Abdichtung des Fensters oder der Tür sorgen. In der Position innerhalb einer Nut 4 und 5, insbesondere einer Kedernut - wie in Fig. 1 und 2 - sorgen ausgeprägte Schweißraupen für ein stärkeres Einklemmen der Kederdichtung und erschweren das Verschließen des Fensters. Die in Fig. 1 und 2 dargestellten Schweißraupen weisen allerdings eine sehr geringe Ausprägung in der Höhe von vorzugsweise weniger als 1mm, besonders bevorzugt weniger als 0,5 mm, auf.

Dadurch treten die vorgenannten Nachteile aufgrund der geringen Höhe der Schweißraupe nicht auf.

Fig. 2 zeigt eine Anordnung von Schweißraupen entlang Innenseite der Eckverbindung 50. Die Schweißverbindungen 10, 10', 11, 11' in Form von Schweißraupen erstrecken sich parallel zur Längsachse A des jeweiligen Profils 1 und 2.

Die Position und Längserstreckung der Schweißverbindung 6, 7 und 10, 11 als Schweißraupen erklärt sich dadurch, dass die die beiden Profile 1 und 2 indirekt über einen Eckverbinderwinkel miteinander verschweißt sind. Dabei verbinden die jeweiligen Schweißraupen jeweils einen in Fig. 1 und 2 nicht-dargestellten Eckverbinderwinkel mit der Profilwandung, welche den Boden der jeweiligen Nut 4 und 5 durch stoffschloss. Dabei wird ein Laserstrahl jeweils auf eine Außenfläche der Profilwand des Profils 1 und 2 geleitet, an welcher dieser das Profil derart stark erhitzt, dass es auf der entgegengesetzten Seite der Profilwand zu einem Stoffschluss mit dem Eckverbinderwinkel kommt. Dies bezeichnet man allgemein als durchgeschweißte Verbindung.

Um eine geringe Schweißnahthöhe bzw. eine geringe Höhe der Schweißraupe zu erhalten wird auf die Verwendung eines Schweißzusatzes verzichtet. Besonders bevorzugt ist die Schweißnaht gesehen von der Außenfläche des Profils eben mit den benachbarten Bereichen oder sogar als Absenkung gegenüber den benachbarten Bereichen ausgebildet.

Im Rahmen einer Nacharbeitung kann eine Glättung durch den Laser erfolgen, so dass die ebene Anordnung der Schweißnaht besser ausgebildet werden kann. Im Fall einer Absenkung kann ein Auftrag von zusätzlichem Beschichtungsmaterial, z.B. durch Sputtern oder dergleichen, erfolgen. Das Beschichtungsmaterial kann durch den Laser zusätzlich aufgeschmolzen und dadurch eine ebene Ausbildung mit den benachbarten Bereichen erzeugen. In diesen Bereichen ist die Dicke der Beschichtungsschicht entsprechend höher als in den benachbarten Bereichen.

Eine weitere Höhenreduzierung der Schweißnaht durch sehr präzisen Wärmeeintrag wird erreicht, wenn als Laserschweißgerät ein Faserlaser genutzt wird. Der Faserlaser kann als sogenannter Multikopf-Faserlaser ausgebildet sein, welcher es erlaubt, jeweils zwei oder mehr Schweißnähte, z.B. die Schweißnähte 6 und 7 oder 10 und 11 zeitgleich anzubringen.

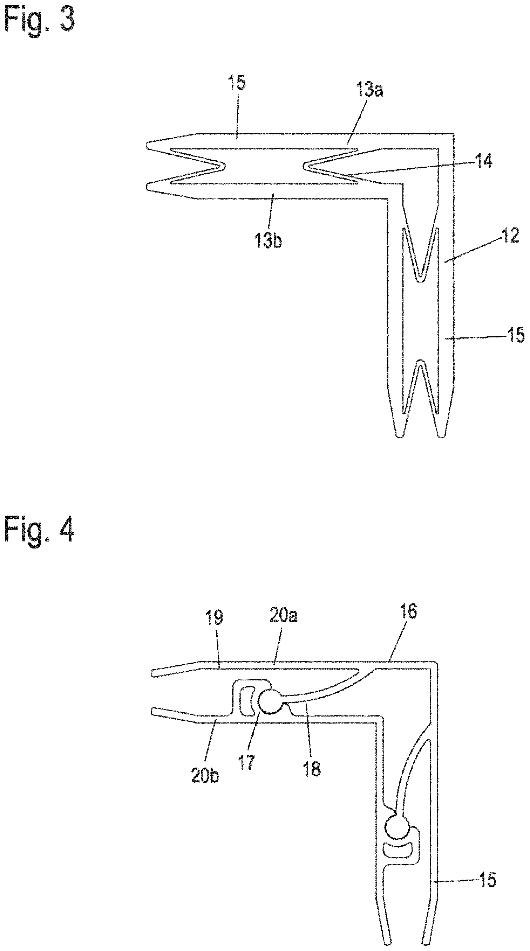

Die Schenkel des Eckverbinderwinkels als Verbindungshilfsmittel sind in korrespondierenden Profilkammern 8 der beiden Profile 1 und 2 angeordnet und stabilisieren die Eckverbindung 50 zusätzlich. Idealerweise legen sich die verwendeten Eckverbinderwinkel flächig an die Profilwand an. Dies kann über Eckverbinderwinkel mit Federschenkeln erfolgen oder aber über Eckverbinderwinkel als Formkörper aus einem Vollmaterial
Die Fig. 3 und 4 zeigen zwei beispielhafte Varianten für Eckverbinderwinkel 12 und 16.

Fig. 3 zeigt einen Eckverbinderwinkel 12 mit zwei komprimierbaren Federschenkel 15, welche senkrecht zur Längserstreckung komprimierbar ausgebildet sind.

Die Federschenkel 15 umfassen jeweils zwei Anlagewandungen 13a und 13b zur Anlage in den Wandungen einer Profilkammer 8 und 9 und dazwischen angeordnete elastisch-verformbare Stege 14 mit einer Sollknickstelle. Die Federschenkel sind endständig verjüngend ausgebildet, so dass sie besser in die jeweilige Profilkammer einführbar sind. Der Abstand der Anlagewandungen 13a und 13b ist unter Einwirkung einer Kraft verringerbar unter Ausbildung einer Rückstellkraft. Dadurch können die Federschenkel 15 mit verringertem Abstand der Anlagewandungen 13a und 13b in die Profilkammer 8 oder 9 eingeführt werden und dann nach Rückstellung gegen die Profilkammerwandungen angepresst werden. Dadurch erfolgt ein optimaler Kontakt mit der Profilkammerwand beim Durchschweißen durch das Laserschweißen.

Alternativ zu den elastisch-verformbaren Stegen 14 können auch andere elastisch-verformbare Mittel vorgesehen sein. Dies kann eine andere Form von Stegen oder beispielsweise auch ein Elastomer zwischen den Anlagewandungen 13a und 13b sein. Der sehr zielgenaue Wärmeeintrag durch das Laserschweißen ermöglicht auch die Verwendung von Kunststoffen, welche nicht hitzestabil bei den Temperaturen im Schweißbereich sind, welche allerdings außerhalb des Schweißbereichs als Teil des Eckverbinderwinkels angeordnet sein können.

Fig. 4 zeigt eine zweite einer Vielzahl von Varianten für den Eckverbinderwinkel 16 mit zwei Federschenkeln 19. Auch hier weisen die Federschenkel 19 zwei Anlagewandungen 20a und 20b auf, welche einen variablen Abstand zueinander unter Ausbildung einer Rückstellkraft aufweisen können.

Hier sind die beiden Anlagewandungen 20a und 20b über einen Federsteg 18 miteinander verbunden, welcher sich bei Verringerung des Abstandes der Anlagewandungen 20a und 20b, unter Biegeverformung gegen einen Anschlag 17 abstützt. Dieser Anschlag 17 ist in Fig. 4 als Kalotte ausgebildet in welchem ein kugelförmiger Endabschnitt des Federstegs 18 einliegt.

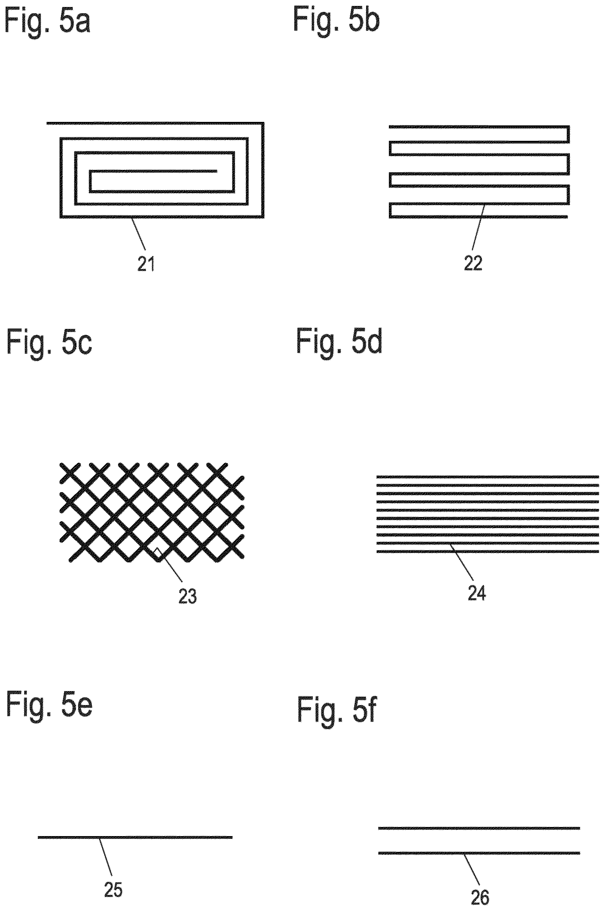

Fig. 5a-5f zeigt mehrere Varianten von Schweißgeometrien, welche als Schweißlinie oder als Flächenschweißgeometrie zur Verbindung eines Profils mit einem Schenkel eines Eckverbinderwinkels, wie sie z.B. in Fig. 3 und 4 gezeigt sind, im Rahmen einer Laserverschweißung genutzt werden können.

Fig. 5a zeigt eine einzige Schweißlinie 21 in einer spiralförmige Schweißgeometrie.

Fig. 5b zeigt eine einzige Schweißlinie 22 in mäanderförmiger Schweißgeometrie.

Fig. 5c zeigt ein Kreuzmuster 23 als Flächenschweißverbindung aus mehreren sich überkreuzenden Schweißlinien.

Fig. 5d zeigt ein Schweißmuster 24 als Flächenschweißverbindung aus mehreren parallel zueinander angeordneten Schweißlinien 25.

Fig. 5e zeigt eine einzige geradlinige Schweißlinie 15 und Fig. 5f zeigt zwei parallel zueinander verlaufende Schweißlinien 26.

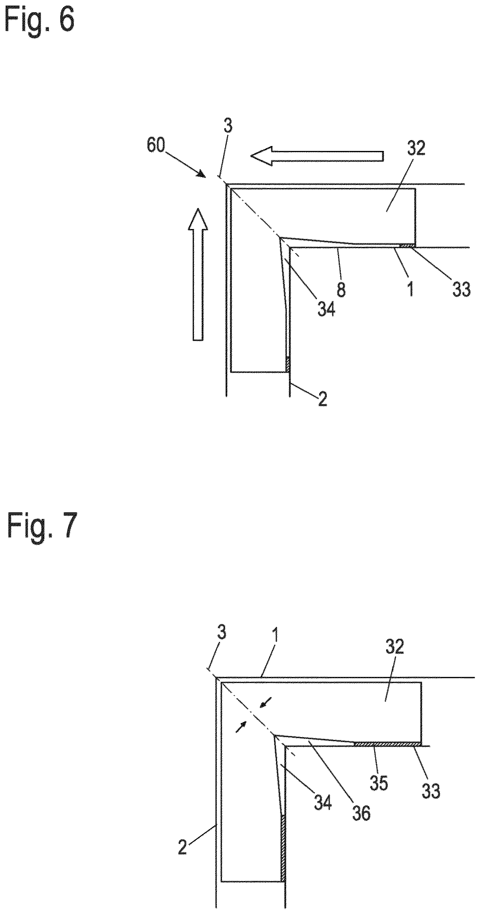

Fig. 6 zeigt eine Eckverbindung 50, wie sie beispielsweise in Fig. 1 und 2 im Bereich der Profilkammer 8 vorliegen kann. Fig. 6 weist hierfür eine weitere Variante eines Eckverbinderwinkels 32 auf. Dieser der Eckverbinderwinkel 32 ist zur besseren Stabilisierung der Eckverbindung aus einem Vollmaterial gefertigt.

In Fig. 6 ist eine anfängliche Schweißverbindung 33 unter Stoffschluss der Profilwandung einer Profilkammer 8 und des Eckverbinderwinkels 32 einer Eckverbindung 60 ausgebildet. Der Abstand 34 zwischen dem Eckverbinderwinkel 32 und der Profilwandung der Profilkammer 8 ist nicht uniform, sondern nimmt in Richtung des Schenkelübergangs bzw. dem Kontaktbereich 3 der beiden Profile 1 und 2 allmählich oder sprunghaft zu. Dies liegt daran, dass die Winkelinnenfläche 36 zumindest im Kontaktbereich der beiden Schenkel des Eckverbinderwinkels einen kleineren Winkel definiert als die Längsachsen der beiden Schenkel des Eckverbinderwinkels. Entsprechend verringert sich der Durchmesser und/oder der Querschnitt des Eckverbinderwinkels 32 vom Ende des Schenkels in Richtung des Schenkelübergangs von einem Schenkel in den anderen Schenkel.

In Fig. 6 sind überdies die Schweißrichtungen zur Erzeugung der Schweißnähte der Eckverbindung 60 dargestellt. Sie erfolgen parallel zur Längsachse A von einem dem Kontaktbereich 3 fernen Startpunkt zu einem dem Kontaktbereich 3 nahen Endpunkt hin.

Der Grund für diese ungewöhnliche konstruktive Ausgestaltung des Eckverbinderwinkels 32 ergibt sich aus dem anfänglichen Schweißzustand der Fig. 6 und dem final-verschweißten Zustand der Fig. 7. Dabei wächst die Schweißverbindung 33 um einen weiteren Bereich 35 an. Bei Abkühlen aufgrund der temperaturbedingten Materialschrumpfung verringert sich der Abstand 34 im Bereich der Schweißverbindung 33. Beim Erkalten zieht sich die stoffschlüssige Verbindung zwischen dem Metallprofil und dem Eckverbinderwinkel 32 zusammen und setzt die Profile im Kontaktbereich 3 aneinander unter eine Vorspannung, so dass diese durch diese zusätzliche Kraft aneinandergepresst werden. Dieser Eckanzug durch die bereitgestellte Vorspannung in Folge der Beachtung der Schweißfolge sorgt für eine bessere Abdichtung im Kontaktbereich 3.

Die in Fig. 1-7 gezeigte Variante kann ohne Öffnung der Profilwand durch Durchschweißen erfolgen. Es ist allerdings auch möglich, einen Durchbruch in der Profilwand, z.B. eine Bohrung, zu schaffen, mit welchem der Laserstrahl direkt auf den Schweißbereich zwischen der Profilwand und dem Eckverbinderwinkel geleitet wird. Diese auch als Schlüsselloch-Verfahren bekannte Technik ermöglicht einen gezielteren Energieeintrag, benötigt allerdings ein eher unvorteilhaftes Öffnen des Profils mit dem anschließenden Erfordernis einer möglichen Abdichtung des Durchbruchs.

Fig. 8-10 beschreibt eine weitere Variante der Verschweißung zweier Profile 1 und 2 zur Ausbildung einer Eckverbindung 70. Dabei wird die Profilwand 1 oder 2 in Vorbereitung in einem ersten Schritt 101 auf die Verschweißung endständig abgeschrägt und zwar derart, dass die einander zugewandten Stirnflächen 27 und 28 der Profilwände der jeweiligen Profile 1 und 2 nicht, wie üblich plan, sondern spitz-zulaufend zueinander im Kontaktbereich 3 ausgebildet sind.

In einem zweiten Schritt 102 erfolgt das Aufeinanderpressen beider Stirnflächen 27 und 28 unter Ausbildung zweite Bördelkanten 29 und 30 bei Einwirken eines entsprechenden Anpressdrucks jenseits des Kontaktbereichs 3. Dies vergrößert die Fügestelle zugunsten einer stabileren Verbindung.

Schließlich erfolgt in einem dritten Schritt 103 die Verschweißung unter Stoffschluss durch Zuleiten eines Laserstrahls auf den Kontaktbereich.

Dabei bildet sich eine Schweißverbindung 31 aus, welche in Fig. 10 gegenüber den benachbarten Flächen sichtseitig hervorsteht. Die Schweißnaht 31 kann bei Abschrägung im ersten Schritt 101 in entgegengesetzter Richtung als in Fig. 8 dargestellt selbstverständlich auch entlang der Rückseite R hervorstehen. Dieses Hervorstehen der Schweißnaht 31 ist keine zwingende Folge des Laserschwei-ßens, sondern lediglich eine Folge des Materialüberstandes der Bördelkanten 29 und 30.

Die Schweißnaht kann durch eine Nachbehandlung, z.B. eine nochmalige Laserbestrahlung, in ihrer Höhe verringert werden. Weiterhin kann die Schweißnaht, bei Schädigung der Beschichtung, durch lokalen Beschichtungsauftrag, z.B. durch Sputtern von Farbpartikel, erneut beschichtet werden. Auch hierfür kann eine Laserbehandlung zum Verschmelzen partikulärer Beschichtungsanteile genutzt werden. Insgesamt wird durch das vorbeschriebene Verfahren zur Ausbildung der direkten Eckverbindung 70 zwischen den Profilen 1 und 2 unter Verwendung eines Laserschmelzverfahrens eine lediglich geringe Aufwölbung im Kontaktbereich realisiert, bei gleichzeitigem geringem Abbrand der Beschichtung im Bereich der Schweißnaht.

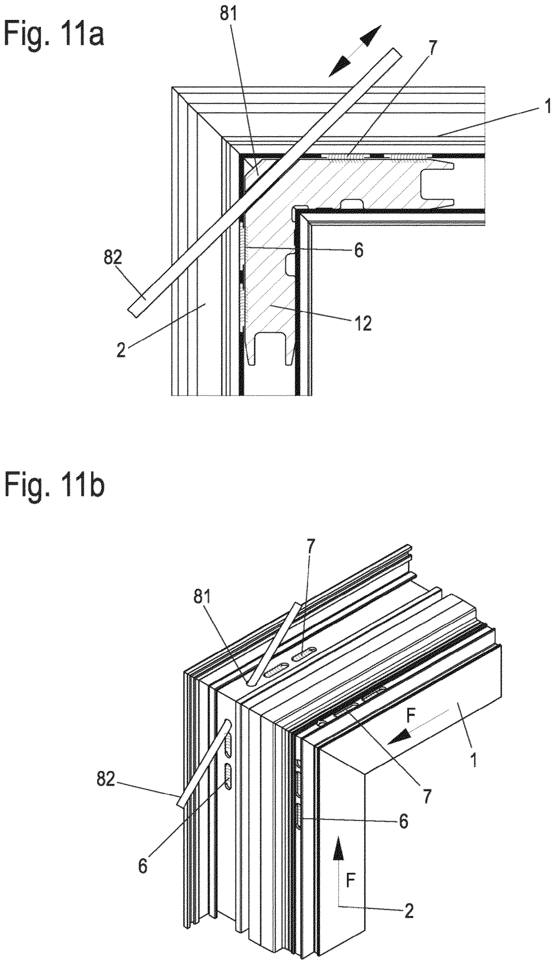

Fig. 11a und Fig. 11b zeigt jeweils eine Perspektiv- und eine Schnittdarstellung einer Variante der Vorfixierung vor dem eigentlichen Verschweißen. Dabei wird eine Bohrung 81 mit geradem Bohrkanal durch die beiden Metallprofile 1, 2 und durch den Eckverbinder 12 angeordnet.

Die Vorfixierung erfolgt durch Einführen eines mechanischen Fixierungsmittels 82, z.B. einer Stange, einer Schraube und/oder eines Stifts, in die Bohrung.

Das Fixierungsmittel 82, hier in Form einer Stange, weist eine Längsachse auf, die senkrecht zur Gehrung der Eckverbindung angeordnet ist. Nach dem Verschweißen kann optional ein Verschluss des Bohrkanals ebenfalls durch Verschweißen, ggf. mit Hilfe eines schweißfähigen Bohrlocheinsatzes, erfolgen.

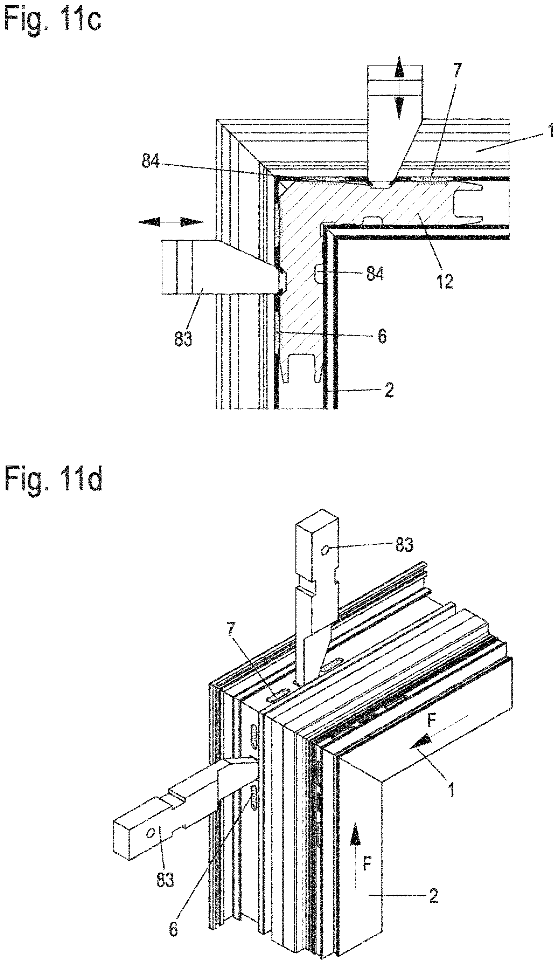

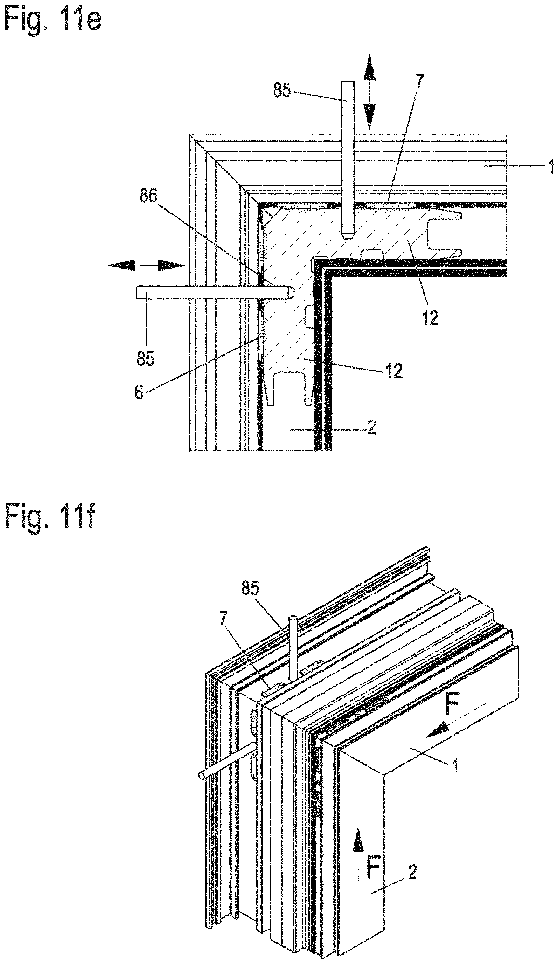

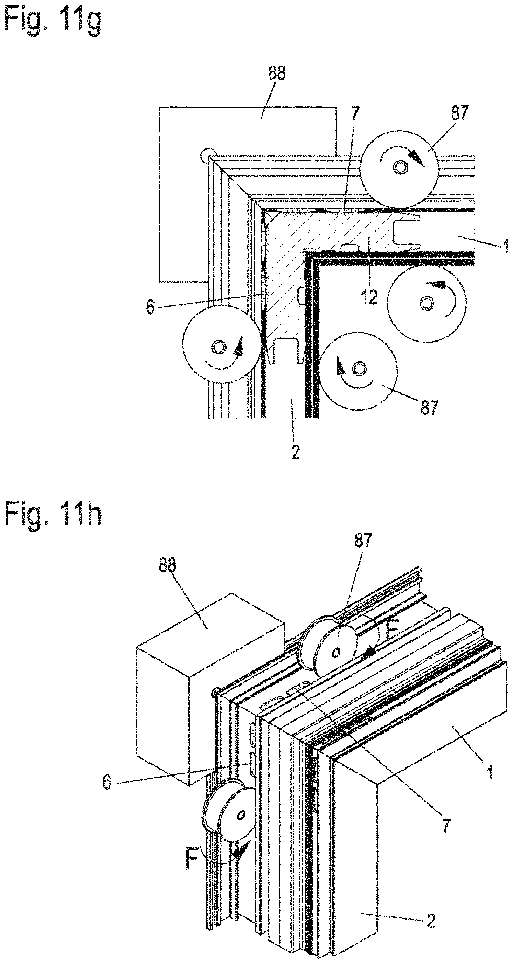

Fig. 11 c und 11d zeigen eine zweite Variante der Vorfixierung durch Einstanzen oder Einklemmen. Dies kann vorzugsweise durch ein Stanz- oder Klemmwerkzeug 83 erfolgen. Der Eckverbinderwinkel 12 weist Vertiefungen 84 entlang der Schenkel auf. Das Stanz- oder Klemmwerkzeug 83 verformt die Wandung des Metallprofils, insbesondere durch Eindrücken, derart, dass die Wandung bereichsweise in die Vertiefung 84 hineinragt. Durch diese Verformung, insbesondere durch Verpressen und/oder Verstanzen, des Metallprofils wird ein Formschluss mit dem Eckverbinderwinkel 12 erreicht. Anschließend erfolgt das Verschweißen der Metallprofile 1 und 2 mit dem Eckverbinderwinkel 12.

Fig. 11e und 11f offenbart eine weitere Variante der Vorfixierung, wobei eine Fixierung des Eckverbinderwinkels 12 mit den Metallprofilen 1 und 2 mit einer Stange 85, insbesondere mit einem Dorn, erfolgt. Dabei wird zunächst ein Loch 86, z.B. ein Nagelloch, coaxial jeweils in das Metallprofil 1 oder 2 und den Eckverbinderwinkel 12 eingebracht. Anschließend wird die besagte Stange 85 oder ein anderes mechanisches Fixierungsmittel, z.B. eine Schraube, in das Loch 86 eingeführt. Dabei werden pro Eckverbindung jeweils zwei Löcher eingebracht. Vorzugsweise stehen die Längsachsen der beiden mechanischen Fixierungsmittel senkrecht zueinander und im Winkel von 45° zur Gehrung der Metallprofile 1 und 2.

Fig. 11g und 11h offenbaren eine weitere Variante der Vorfixierung in welchen eine Umformung der Metallprofile 1 und 2 nach Einsatz des Eckverbinderwinkels in die Profile erfolgt. Die Umformung erfolgt durch Einrollen der Metallprofilwandung in Richtung des Eckverbinderwinkels durch ein sogenanntes Druck-Rollenwerkzeug 87. Die Umformung kann verstärkt werden, indem die Eckverbindung in eine Eckwinkelaufnahme 88 gepresst wird. Wie in Fig. 11g und 11h dargestellt, werden die Rollen des Werkzeugs entlang der Oberfläche der Eckverbindung aufeinander zubewegt. Anschließend kann erneut ein Verschweißen erfolgen.

Im Fall der Umformungen gemäß Fig. 11c und 11d, sowie 11g und 11h bleibt die Vorfixierung auch nach dem Verschweißen erhalten.

Die in Fig. 11a - 11h dargestellten Varianten der Vorfixierung haben sich grundsätzlich als günstig zur Schaffung einer definierten Schweißverbindung bei geringen Spaltmaßen erwiesen. Eine besonders leicht handhabbare und zugleich optimale Vorfixierung wird durch die Variante der Fig. 11e und 11f erreicht, wie sich anhand umfangreicher Vergleichsversuche auch mit nicht-dargestellten Varianten einer Vorfixierung überraschend ergeben hat.

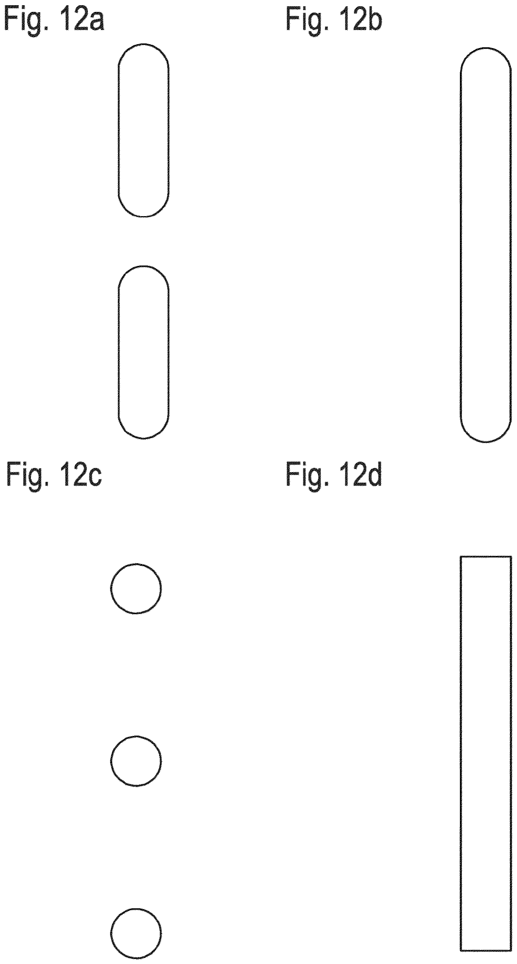

Es sind verschiedene Stanzgeometrien zur Realisierung einer Vorfixierung möglich. Diese sind in Fig. 12 a-d dargestellt.

Durch das erfindungsgemäße Verfahren kann insbesondere die Nachhaltigkeit und der Umweltschutz einer Profil- und Rahmenverbindung verbessert werden.

Die sortenreine Trennung der Materialien wird durch Substitution von üblichen Klebstoffen durch mechanische Verbindungen vereinfacht. Besonders vorteilhaft ist hierbei auch, die Kombinatorik einer zeitlich-begrenzten Vorfixierung aus Nageln, Krimpen, Schrauben, Stanzen, Spannen (Rahmenaufnahme) und dem Schweißverfahren bevorzugt Laser-, Widerstandspunkt-, Löt- und Schutzgasschweißverfahren. Der Eckverbinderwinkel weist dabei eine angepasste Kontur hinsichtlich Toleranz und Lageausgleich auf..

Der erfindungsgemäße Ansatz sieht vor, dass rohe unbeschichtete oder oberflächenbehandelte Profile z.B. eloxierte, lackierte und/oder farbbeschichtete Metallprofile mit und/oder Vorbehandlung, an Nebensichtflächen miteinander dauerhaft metallisch durch Stoffschluss mittels Energie, z.B. unter Wärmeeinfluss, miteinander verbunden werden.

Dieser Schritt ermöglicht es bei einer industriellen Verarbeitung die heutigen Taktzeiten einer manuellen Fertigung zu erhöhen.

Das erfindungsgemäße Verfahren ermöglicht überdies eine manuelle und/oder teilautomatisierte bzw. automatisierte Profilverbindung und Rahmenfertigung.

Zudem ermöglicht dieses Verfahren das Führen des statischen Nachweises dieser Profilverbindungen insbesondere von Pfosten und Riegelverbindungen.

### Bezugszeichen

- 1: Profil
- 2: Profil
- 3: Kontaktbereich
- 4: Nut
- 5: Nut
- 6, 6': Schweißverbindung
- 7, 7': Schweißverbindung
- 8: Profilkammer
- 9: Profilkammer
- 10, 10': Schweißverbindung
- 11, 11': Schweißverbindung
- 12: Eckverbinderwinkel
- 13a: Anlagewandung
- 13b: Anlagewandung
- 14: elastisch-verformbare Stege
- 15: Federschenkel
- 16: Eckverbinderwinkel
- 17: Anschlag
- 18: Federsteg
- 19: Federschenkel
- 20a: Anlagewandung
- 20b: Anlagewandung
- 21: Schweißlinie
- 22: Schweißlinie
- 23: Kreuzmuster
- 24: Schweißmuster
- 25: Schweißlinie
- 26: Schweißlinien
- 27: Stirnfläche
- 28: Stirnfläche
- 29: Bördelkante
- 30: Bördelkante
- 31: Schweißverbindung
- 32: Eckverbinderwinkel
- 33: Schweißverbindung
- 34: Abstand
- 35: Bereich
- 36: Winkelinnenfläche

- 50: Eckverbindung
- 60: Eckverbindung
- 70: Eckverbindung

- 81: Bohrung
- 82: Fixierungsmittel
- 83: Stanz- und/oder Klemmwerkzeug
- 84: Vertiefung
- 85: Stange
- 86: Loch
- 87: Druck-Rollenwerkzeug
- 88: Eckwinkelaufnahme

- R, R': Rückseite
- S, S': Sichtseite
- L: Längsachse (Metallprofil)

- 101: erster Schritt
- 102: zweiter Schritt
- 103: dritter Schritt

## Patentansprüche

1. Fenster-, Tür- und/oder Fassadenkonstruktion umfassend eine Eckverbindung (50, 60, 70) mit zwei miteinander durch eine oder mehrere Schweißverbindungen (6, 7, 6' ,7', 10, 10', 11, 11', 33) verbundene Metallprofile (1, 2), wobei die Schweißverbindung oder Schweißverbindungen (6, 7, 6' ,7', 10, 10', 11, 11', 31, 33) als eine laserverschweißte Verbindung ausgebildet ist, **dadurch gekennzeichnet, dass** die Schweißverbindung und/oder Schweißverbindungen (6, 7, 6' ,7', 10, 10', 11, 11', 33) die Profile (1, 2) mittelbar mittels eines Eckverbinderwinkels (12, 16, 32), miteinander verbindet, wobei besonders bevorzugt die Profile (1, 2) jeweils Profilkammern (8, 9) aufweist, wobei der Eckverbinderwinkel (12, 16, 32) zumindest zwei Schenkel aufweist, welche in den Profilkammern (8, 9) eingesteckt sind.

2. Fenster-, Tür- und/oder Fassadenkonstruktion nach Anspruch 1, **dadurch gekennzeichnet, dass** die Schweißverbindung (6, 7, 6' ,7', 10, 10', 11, 11', 31, 33) als Schweißnaht, als Linie aus mehreren Schweißpunkten oder Flächenschweißgeometrie mit einem Überstand gegenüber den benachbarten Bereichen von weniger als 1 mm, vorzugsweise weniger als 0,5 mm, vorzugsweise weniger als 0,1 mm oder gegenüber den benachbarten Bereichen als Vertiefung ausgebildet ist.

3. Fenster-, Tür- und/oder Fassadenkonstruktion nach Anspruch 1 oder 2, **dadurch gekennzeichnet, dass** benachbart zur laserverschweißten Verbindung ein lackierter Bereich als Abbrandbereich ausgebildet ist, welcher Produkte der thermischen Zersetzung des Lackes aufweist.

4. Fenster-, Tür- und/oder Fassadenkonstruktion nach Anspruch 3, **dadurch gekennzeichnet, dass** der lackierte Bereich umfassend die Produkte der thermischen Zersetzung des Lackes, als Abbrandbereich, sich in einer Breite von weniger als 2 mm, vorzugsweise weniger als 1 mm, von der lasergeschweißten Verbindung weg erstreckt.

5. Fenster-, Tür- und/oder Fassadenkonstruktion nach einem der vorhergehenden Ansprüche, **dadurch gekennzeichnet, dass** der Eckverbinderwinkel (12, 16, 32) ausgebildet ist zum Aufbau einer Vorspannung zwischen zwei aneinander anliegenden Kontaktflächen im Kontaktbereich (3) der Metallprofile (1, 2) im montierten Zustand der Eckverbindung (50, 60).

6. Fenster-, Tür- und/oder Fassadenkonstruktion nach einem der vorhergehenden Ansprüche, **dadurch gekennzeichnet, dass** die Längsachsen der Schenkel des Eckverbinderwinkels (12, 16, 32) einen ersten Winkel definieren, wobei eine aus beiden Schenkeln gebildete Winkelinnenfläche (36) im Kontaktbereich beider Schenkel eine Ausnehmung aufweist oder einen zweiten Winkel definiert, welcher kleiner ist als der erste Winkel.

7. Fenster-, Tür- und/oder Fassadenkonstruktion nach einem der vorhergehenden Ansprüche, **dadurch gekennzeichnet, dass** die zwei Schenkel des Eckverbinderwinkels (12, 16) als Federschenkel (15, 19) zum Abstützen gegen eine Profilwandung ausgebildet sind.

8. Fenster-, Tür- und/oder Fassadenkonstruktion nach einem der vorhergehenden Ansprüche, **dadurch gekennzeichnet, dass** die Schweißverbindung innerhalb einer Nut (4, 5) des Profils (1, 2), vorzugsweise entlang eines Nutbodens, besonders bevorzugt entlang einer Kedernut, angeordnet ist.

9. Fenster-, Tür- und/oder Fassadenkonstruktion nach einem der vorhergehenden Ansprüche, **dadurch gekennzeichnet, dass** die Schweißverbindung (6, 7, 6' ,7', 10, 10', 11, 11', 31, 33) als eine durchgeschweißte Schweißverbindung ausgebildet ist, derart, dass zumindest eine Profilwandung über die Gesamtstärke der Profilwand ein erstarrtes Schmelzbad bildet und, vorzugsweise bei Einsatz eines Eckverbinderwinkels (12, 16, 32) auch ein Teilbereich des Eckverbinderwinkels (12, 16, 32) einen Teil des Schmelzbades bildet.

10. Fenster-, Tür- und/oder Fassadenkonstruktion nach einem der vorhergehenden Ansprüche, **dadurch gekennzeichnet, dass** die Schweißverbindung (6, 7, 6' ,7', 10, 10', 11, 11', 31, 33) schweißzusatzfrei ausgebildet ist.

11. Verfahren zur Herstellung einer Eckverbindung (50, 60, 70) einer Fenster-, Tür- und/oder Fassadenkonstruktion, vorzugsweise gemäß einem der vorhergehenden Ansprüche, **gekennzeichnet durch die folgenden Schritte:**
a) Bereitstellen zweier Metallprofile (1, 2), vorzugsweise beschichteter Metallprofile, und winkliges Aneinander-Positionieren beider Metallprofile (1, 2);
das Bereitstellen durch ein Einführen jeweils eines Schenkels des Eckverbinderwinkels (12, 16, 32) in eine Profilkammer (8, 9) des jeweiligen Metallprofils (1, 2) erfolgt, so dass in jedem der beiden Metallprofile (1, 2) jeweils ein Schenkel des Eckverbinderwinkels (12, 16, 32) angeordnet ist;
und
b) Verschweißen beider Metallprofile (1, 2) unter Verwendung eines Laser-Schweißgerätes, insbesondere eines Faserlaser-Schweißgerätes,
wobei die Leistung des Laser-Schweißgerätes derart eingestellt ist, dass eine durch eine Profilwandung durchgeschweißte Schweißverbindung (6, 7, 6' ,7', 10, 10', 11, 11', 31, 33) bereitgestellt wird, derart, dass zwischen jedem Metallprofil (1, 2) und dem Eckverbinderwinkel (12, 16, 32) zumindest eine, vorzugsweise durchgeschweißte, Schweißverbindung (6, 7, 6' ,7', 10, 10', 11, 11', 33) angeordnet ist.

12. Verfahren nach Anspruch 11, **dadurch gekennzeichnet, dass** zwischen jedem Metallprofil (1, 2) und dem Eckverbinderwinkel (12, 16, 32) zumindest eine durchgeschweißte Schweißverbindung (6, 7, 6' ,7', 10, 10', 11, 11', 33), vorzugsweise unter Ausbildung einer Vorspannung, gebildet wird, welche besonders bevorzugt außerhalb des Kontaktbereichs (3) und besonders bevorzugt außerhalb der Sichtseite (S, S') der beiden Metallprofile (1, 2) angeordnet sind.

13. Verfahren nach einem der vorhergehenden Ansprüche, **dadurch gekennzeichnet, dass** das Verfahren ein Nacharbeiten umfasst, welches eine weitere Laserbearbeitung zur Ausbildung einer Beschichtung, insbesondere durch Schmelzen von Beschichtungskomponenten oder durch strahlenaktivierte Vernetzung des Beschichtungsmaterials oder durch Verdunstung von Beschichtungsbestandteilen umfasst.

14. Verfahren nach einem der vorhergehenden Ansprüche, **dadurch gekennzeichnet, dass** die Metallprofile (1, 2) nach dem Einsetzen des Eckverbinders (12) und vor dem Schweißen gemäß Schritt b) vorfixiert werden, vorzugsweise durch Umformung, besonders bevorzugt unter Formschluss zwischen einem der Metallprofile (1, 2) und dem Eckverbinderwinkel (12), oder durch Einbringen von mechanischen Fixierungsmittel in ein Loch (87) oder eine Bohrung in einem der Metallprofile (1, 2) und dem Eckverbinderwinkel (12).

15. Verfahren nach einem der vorhergehenden Ansprüche, **dadurch gekennzeichnet, dass** zur Herstellung der Schweißverbindung in Schritt b) keine Schweißzusätze eingesetzt werden.
